# EUROPÄISCHE PATENTSCHRIFT

(11) **EP 0 588 812 B1**
(45) Veröffentlichungstag und Bekanntmachung des Hinweises auf die Patenterteilung: **13.03.1996**
(21) Anmeldenummer: 92909981.0
(22) Anmeldetag: 09.05.1992
(51) Int. Cl.: B60N 2/06, B60N 2/02

(54) **SPINDELANTRIEB FÜR EINE VERSTELLEINRICHTUNG FÜR FAHRZEUGSITZE**
SPINDLE DRIVE FOR A VEHICLE-SEAT ADJUSTMENT DEVICE
ENTRAINEMENT DE BROCHE POUR UN DISPOSITIF DE REGLAGE DE SIEGES DE VEHICULES

(30) Priorität: 14.06.1991 DE 4119610
(43) Veröffentlichungstag der Anmeldung: 30.03.1994
(73) Patentinhaber: ITT Automotive Europe GmbH, D-60488 Frankfurt (DE)
(72) Erfinder: JECK, Horst, D-5962 Drollshagen (DE); MENNE, Hans, G., D-5275 Bergneustadt 2 (DE)
(74) Vertreter: Portwich, Peter
(86) Internationale Anmeldenummer: EP9201020
(87) Internationale Veröffentlichungsnummer: WO9222439

(56) Entgegenhaltungen:
- DE-A- 3 521 836
- DE-A- 3 725 158
- DE-A- 3 919 378
- GB-A- 2 151 132
- JP-A- 3 112 729

## Beschreibung

Die Erfindung betrifft einen Spindelantrieb für eine Verstelleinrichtung für Fahrzeugsitze. Ein derartiger Antriebs ist beispielsweise aus der DE-OS 37 25 158 bekannt. In dieser Literaturstelle wird eine mit dem Fahrzeugsitz fest verbundene Schiene über eine drehende Spindel angetrieben, welche in Axialrichtung fest mit dem Sitz verbunden ist. Der Antrieb erfolgt durch ein Stellorgan, welches die Spindel in Drehung versetzt, wobei die Spindeldrehung in eine Längsbewegung des Sitzes umgesetzt wird.

Aus der DE-OS 39 19 378 ist bekannt, bei einer Verstelleinrichtung von Fahrzeugsitzen eine fahrzeugfeste Antriebsmutter vorzusehen, an welcher sich eine mit dem Sitz verbundene, drehende Spindel abstützt und so durch ihre Drehbewegung den Sitz in seiner Längsrichtung befördert.

Aus der dem Oberbegriff entsprechenden DE-OS 35 21 836 ist ein Spindelantrieb für eine Verstelleinrichtung eines Fahrzeugsitzes bekannt, bei dem die Oberschiene auf der Auflagefläche der Antriebsmutter axial gleitend geführt ist. Die Oberschiene ist dabei gegenüber dem Fahrzeugboden in im wesentlichen senkrechter Richtung auf der Auflagefläche der Mutter abgestützt.

Die Erfindung geht daher aus von einer Verstelleinsichtung der sich aus dem Oberbegriff des Hauptanspruchs ergebenden Gattung. Aufgabe der Erfindung ist es, den Aufbau eines derartigen Spindelantriebes hinsichtlich der Führung der Oberschiene als auch zum Schutz gegen ein mögliches Verkanten der Sitzführung gegenüber den fahrzeugfesten Führungsteilen zu verbessern.

Die Aufgabe wird durch die sich aus dem kennzeichnenden Teil des Anspruchs 1 ergebende Merkmalskombination gelöst.

Hierdurch wird die Oberschiene weitgehend an einer seitlichen Auslenkung, also in die in quer zur Spindellängsachse liegende Richtung gehindert. Die Antriebsmutter übernimmt damit nicht nur die Förderung des Sitzes in Längsrichtung der Spindel, sondern zusätzlich die Lastaufnahme des Sitzes in horizontaler Richtung sowie die Führung der Oberschiene in seitlicher Richtung.

Soll die seitliche Führung der Antriebsmutter symmetrisch wirken, empfiehlt sich die Verwendung der Merkmalskombination nach Anspruch 2. Der Vorteil einer derartigen Führung liegt zusätzlich noch darin, daß die Querschnittsfläche der in der Nut geführten Leiste gegenüber der Querschnittsfläche der Antriebsmutter selbst vergleichsweise gering ist, so daß die so geschaffene Führung ebenfalls vergleichsweise unempfindlich gegenüber Temperaturschwankungen, insbesondere großer Temperaturänderung, ist. Das gilt insbesondere für die Abmessungen in seitlicher Richtung.

In Weiterbildung der Erfindung kann die Führungsleiste gemäß Anspruch 3 mit der Oberschiene einstückig verbunden sein. Das kann gemäß Anspruch 4 durch ein Tiefziehverfahren, ein Gießverfahren oder ein Strangpreßverfahren geschehen.

Die Leiste kann aber auch gemäß Anspruch 5 aus einem gesonderten, insbesondere gleitfähigem Material bestehen, welches die Gleiteigenschaften der Oberschiene auf der Antriebsmutter fördert und unterstützt.

Einen besonders einfachen Aufbau erhält man unter Nutzung der Merkmale nach Anspruch 6. Dabei ist die Führungsleiste im wesentlichen über die gesamte Länge der Oberschiene erstreckt und ragt gleitend in eine entsprechende Ausnehmung der Antriebsmutter. Die Führungsleiste kann dabei aus einem gesonderten gleitfähigen Material bestehen, welches die Gleitfähigkeit der Oberschiene auf der Antriebsmutter verbessert.

Wird die Führung weniger stark beansprucht, so läßt sich auch die Merkmalskombination nach Anspruch 7 anwenden. Dabei besitzt die Antriebsmutter einen Ansatz, der fest oder ggf. einstückig mit der Mutter verbunden sein kann und welcher in eine entsprechende Längsnut der Oberschiene eingreift und diese so führt. Zur Verbesserung der Gleiteigenschaften des Antriebs kann die Antriebsmutter aus einem gleitfähigen Kunststoff gefertigt sein, so daß eine gesonderte Schmierung dieser Führung nicht notwendig ist. Eine derartige Antriebsmutter hat auch den Vorteil, daß sie auch bei komplizierterer Ausgestaltung recht preiswert geformt werden kann.

Um Gewicht bei der Herstellung des Sitzes zu sparen, kann die Merkmalskombination nach Anspruch 9 verwendet werden. Hierbei sind insbesondere die Gleiteigenschaften des Kunststoffs bei einer aus Kunststoff gebildeten Antriebsmutter wichtig. Auch kommen die Führungseigenschaften der erfinderischen Ausgestaltung bei einer Aluminiumschiene hervorragend zur Auswirkung, da wegen der relativ geringen Breite der Führung die unterschiedlichen Schrumpfungseigenschaften der beiden voneinander abweichenden Materialien bei großen Temperaturunterschieden sich weniger unangenehm bemerkbar machen.

Soweit die Oberschiene in horizontaler Richtung schwenkbar ist, beispielsweise durch einen entsprechenden Bewegungsablauf während ihrer axialen Bewegung oder aber durch eine für die Sitzfläche zugelassene Schwenkbewegung im Ruhezustand, so empfiehlt sich, in Weiterbildung der Erfindung, eine Merkmalskombination nach Anspruch 10.

Bei einer derartigen Lagerung empfiehlt sich insbesondere die Anwendung der Merkmalskombination nach Anspruch 11. Hierdurch kann die Auflagefläche der Antriebsmutter gegen den sich ändernden Neigungswinkel der Oberschiene in einfacher Weise angepaßt werden.

Eine zusätzliche seitliche Abstützung der Oberschiene läßt sich durch Anwendung der Merkmalskombination nach Anspruch 12 erreichen. Hierdurch werden die freien Enden der vergleichsweise kräftigen Zapfen zusätzlich dazu ausgenutzt, quer zur Spindellängsachse und im wesentlichen horizontal gerichtete Kräfte aufzunehmen und über die Lagerung der Antriebsmutter in den Boden des Kraftfahrzeugs abzuleiten. Hier muß allerdings darauf geachtet werden, daß die Tolerierungen zwischen den Enden der Zapfen und den Seitenwänden der Oberschiene nicht zu knapp gewählt werden, da bei niedrigen Temperaturen, insbesondere bei einer aus Aluminium bestehenden Oberschiene, diese erheblich schrumpft, und der Sitz dann leicht klemmen kann. Andererseits ist bei dieser notwendigerweise weiten Tolerierung zu befürchten, daß bei großen Temperaturen die Schiene sich in ihren seitlichen Abmessungen dehnt und somit ein erhebliches Spiel zwischen den Zapfen und sich daran anschließenden Seitenwänden der Oberschiene besteht. Hierdurch kann ein unangenehmer Schubladeneffekt auftreten, indem die Oberschiene gegenüber den Führungsflächen der Antriebsmutter verkantet. In diesem Falle sind die im Zusammenhang mit Anspruch 1 und den folgenden Ansprüchen geschilderten Führungseigenschaften der erfinderischen Ausgestaltung sehr wertvoll, da sie wegen der geringen Ausdehnung dieser Führungen weitgehend temperaturunempfindlich sind.

Um ein Ausheben der Oberschiene vertikal nach oben gegenüber der Antriebsmutter zu verhindern, können in vorteilhafter Weiterbildung der Erfindung Maßnahmen nach Anspruch 13 eingesetzt werden. Hierbei hintergreifen in horizontaler Richtung verlaufende Ansätze an der Oberschiene entsprechende Vorsprünge der Antriebsmutter, insbesondere die horizontal wegragenden Zapfen. Diese Ansätze erstrecken sich vorzugsweise über den gesamten Weg der Oberschiene oder aber über deren gesamte Länge.

Um die Angriffsfläche der Zapfen an den Ansätzen zu vergrößern und um das Führungsverhalten der Antriebsmutter gegenüber Schwenkbewegungen der Oberschiene zu verbessern, empfiehlt sich die Verwendung der Merkmale nach Anspruch 14. Man erhält somit eine vergrößerte Auflagefläche der Ansätze an den Zapfen, während andernfalls die Zapfen nur linienförmig an den Ansätzen anlägen.

Eine zusätzliche Sicherung gegen eine ungewollte Vertikalbewegung der Oberschiene, etwa bei einem Unfall, läßt sich durch die Merkmale des Anspruchs 15 erreichen. Hierbei sind in aus dem Käfig in horizontaler Richtung ragende Sicherungslaschen ausgeformt, die ggf. an den Ansätzen der Oberschiene angreifen. Dabei wird die wirksame Fläche dieser Laschen in der Regel oberhalb der Wirkungsfläche der Zapfen gegenüber den Schienenansätzen liegen. Auf diese Weise werden die Ansätze im Normalfall gleitend an den vielfach aus Kunststoff bestehenden Zapfen geführt. Reißen diese Kunststoffzapfen während eines Unfalls allerdings aus, so werden die Sicherungslaschen an dem Käfig gegenüber den vertikal nach oben sich bewegenden Ansätzen wirksam. Diese Sicherungslaschen werden vorzugsweise einstückig aus dem aus Stahl hergestellten Käfig herausgeformt sein.

Für den Käfig selbst erhält man einen besonders einfachen und preiswerten Aufbau durch die Anwendung der in Anspruch 16 geschilderten Merkmale. Hierdurch wird der Einbau der Antriebsmutter in den Käfig relativ einfach, indem in eine entsprechende Öffnung des einen Käfigteils der Zapfen einer Mutter eingesetzt, danach die entsprechende Öffnung des zweiten Käfigteils auf den gegenüberliegenden Zapfen geschoben und danach das zweite Käfigteil mit dem ersten verbunden wird. Eine weitere Vereinfachung für den Käfig läßt sich durch die Merkmale nach Anspruch 17 erreichen. Dabei ist es gemäß Anspruch 20 nicht unbedingt notwendig, daß sich die Unterschiene über einen größeren Teil des möglichen Bewegungsweges der Oberschiene erstreckt. Es reicht, wenn einzelne Pfosten vorgesehen sind, welche zur Führung in die Oberschiene ragen und diese abstützen.

Ein Ausführungsbeispiel der Erfindung wird nachfolgend anhand der Zeichnung erläutert. Darin zeigt:
- Figur 1: in abgebrochener, perspektivischer und teilweise symbolischer Darstellung die Befestigung der Oberschiene auf der in dem Käfig angeordneten Antriebsmutter,
- Figur 2: in teilweise geschnittener Darstellung die in den Seitenwänden des Käfigs angeordnete Mutter in Spindellängsrichtung gesehen,
- Figur 3: die an dem einen Teil des Käfigs befestigte Antriebsmutter, wobei der zweite Teil des Käfigs zur besseren Übersichtlichkeit weggenommen wurde,
- Figur 4: einen Schnitt oberhalb der Antriebsmutter durch die Oberschiene in horizontaler Richtung, wobei der die Mutter von unten haltende Käfig weggelassen wurde,
- Figur 5: in Längsrichtung der Spindel gesehen einen Schnitt durch eine erste Ausführungsform des Spindelantriebs,
- Figur 6: einen Schnitt in gleicher Höhe durch eine zweite Ausführungsform des Spindelantriebs und
- Figur 7: einen Schnitt durch eine dritte Ausführungsform des erfindungsgemäßen Spindelantriebs.

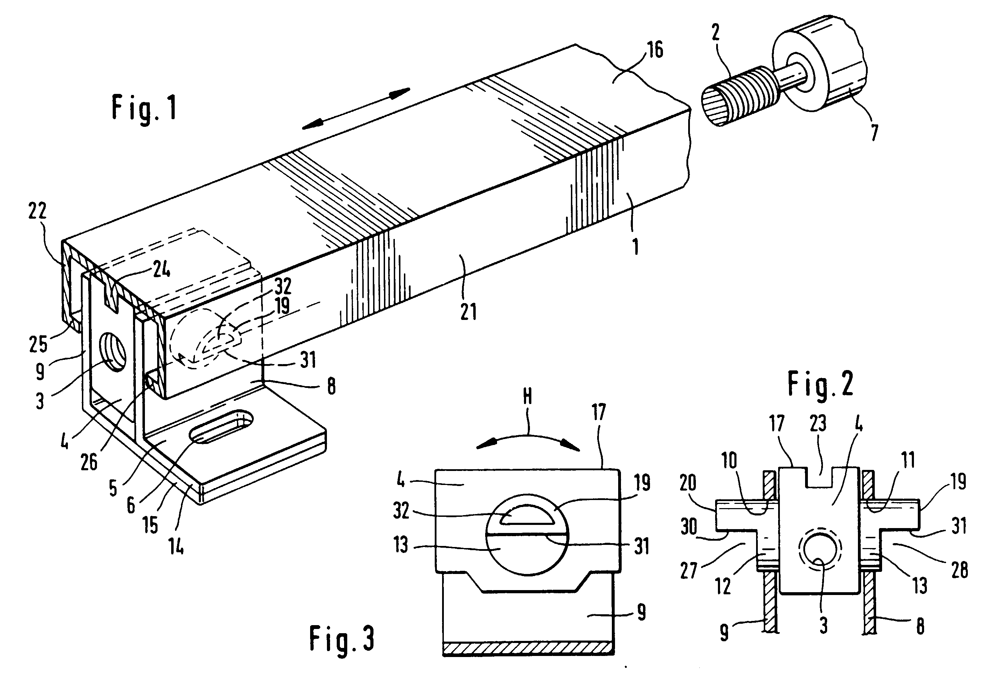

Figur 1 zeigt eine Oberschiene 1, zu der (in der Zeichnung nicht dargestellt) eine mit Außengewinde versehene Spindel 2, drehbar aber nicht axial verschiebbar, gelagert ist. Damit folgt die Oberschiene 1 einer Längsbewegung der Spindel 2. Die Spindel 2 durchragt eine mit einem Innengewinde 3 versehene Antriebsmutter 4, die in einem Käfig 5 gelagert ist, welcher nachfolgend vielfach als Mutterhalter bezeichnet wird. Der Käfig 5 ist mit dem Boden eines Kraftsfahrzeugs verschraubt, indem eine entsprechende Schraube durch das Langloch 6 ragt und in den Boden des Fahrzeugs eingreift.

Das Innengewinde 3 der Antriebsmutter 4 greift an dem Außengewinde der Spindel 2 an, so daß bei einer Umdrehung der Spindel 2 eine Bewegungskraft von der fahrzeugfesten Mutter 4 auf die Spindel 2 ausgeübt wirde, wodurch diese in ihrer Längsrichtung bewegt wird und dabei die Oberschiene 1 zusammen mit dem Kraftfahrzeugsitz mitnimmt. Zur Ausübung einer Drehbewegung durch die Spindel kann ein mit der Spindel verbundenes Getriebe 7 oder ein manueller Antrieb dienen, der an dem Fahrzeugsitz befestigt sein kann.

Figur 2 zeigt in geschnittener Stellung zwei Seitenflächen 8 und 9 des Käfigs 5, die zwei kreisförmige Öffnungen 10 und 11 besitzen, durch welche zwei im wesentlichen zylinderförmige Zapfen 12 und 13 ragen, welche mit der Antriebsmutter 4 einstückig verbunden sind. Hierdurch ist die Mutter 4 in den Öffnungen 10,11 des Käfigs 5 drehbar gelagert.

Der Käfig selbst ist aus zwei Käfigteilen 14,15 gebildet, die miteinander durch Schweißen, Nieten oder eine andere Verbindungsart unlösbar verbunden werden, nachdem die Mutter zwischen die Seitenflächen 8 und 9 der rechtwinkligen Käfigteile 14,15 eingefürt wurde.

Figur 3 zeigt das Käfigteil 15 ohne das vordere Käfigteil 14 und ohne die Oberschiene 1, aber mit in die Öffnung 10 eingefügter Mutter 4. Durch den Doppelpfeil H soll die Drehbarkeit der Mutter 4 in der kreisförmigen Öffnung 10 angedeutet werden.

Für die Wirkungsweise der Erfindung sehr wichtig ist nun, daß die Oberschiene 1 mit der in Figur 1 unteren Fläche ihres Mittelabschnitts 16 auf der Auflagefläche 17 der Mutter 4 aufliegt und so eine vertikal auf den Mittelabschnitt 16 ausgeübte Kraft auf die Auflagefläche 17 und über die Zapfen 12,13 sowie den Käfig 5 auf den Boden des Fahrzeugs überträgt. Durch die Ausgestaltung der Mutter 4 aus Kunststoff gleitet die Oberschiene 1 schmierungsfrei vergleichtsweise leicht auf der Auflagefläche der Mutter 4.

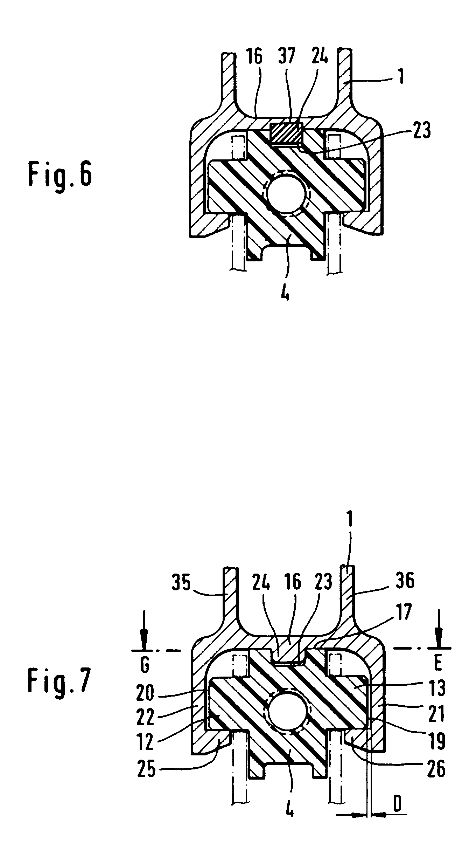

Für die erfindungsgemäße Ausgestaltung ist es weiterhin wichtig, daß sich die an den Mittelabschnitt 16 anschließenden Seitenwände 21,22 an den Stirnflächen 19,20 der Zapfen 12,13 abstützen, so daß die Oberschiene 1 auch quer zur Spindellängsachse durch die Mutter 4 geführt ist. Dabei ist zu beachten, daß bei großen Temperaturen zwischen den Stirnflächen 19,20 der Zapfen 12 und 13 und den Innenflächen der Seitenwände 21,22 der Oberschiene 1 ein vergleichsweise großes Spiel D (siehe Figur 7) vorhanden sein muß, um ein Klemmen der Seitenwände 21,22 gegenüber der Mutter 4 bei sehr niedrigen Temperaturen zu verhindern. Das gilt insbesondere für den Fall, daß die Mutter 4 einschließlich der Zapfen ausschließlich aus Kunststoff und die Oberschiene 1 aus Aluminium gefertigt ist, da in diesem Falle das Temperaturdehnungsverhalten der beiden Materialien sich stark voneinander unterscheidet. Hinzu kommt daß der Abstand der beiden Seitenwände 21,22 vergleichsweise groß ist, so daß sich die Schrumpfungsvorgänge noch stärker bemerkbar machen.

Um hier eine verbesserte Führung zu erhalten, ist in dies Auflagefläche der Mutter 4 eine durchgehende Längsnut in Spindellängsrichtung eingefügt, in der eine Führungsleiste 24 mit vergleichsweise enger Tolerierung gleitet. Die Führungsleiste kann als ein sich im wesentlichen über die gesamte Länge der Oberschiene erstreckender Vorsprung einstückig mit dieser vereint sein, so daß die Führungsleiste beim Strangpressen oder Gießen der Oberschiene gebildet wird und nicht eines besonderen Arbeitsganges bedarf.

Sie kann aber auch, wie aus Figur 6 zu ersehen, ein gesondertes Teil sein, welches beispielsweise in eine entsprechende Ausnehmung 25 des Mittelabschnitts 16 dauerhaft eingefügt und mit diesem gleichsweise fest verbunden ist. Damit gleitet die Führungsleiste 24 in der Längsnut 23 der Mutter 4. Eine derartige Konstruktion ist insbesondere dann vorteilhaft, wenn für die Leiste ein besonderes Material verwendet werden soll, beispielsweise um die Tolerierung zu vereinfachen. Die Aufgabe der Führungsleiste 24 ist es insbesondere, ein Verkanten (Schubladeneffekt) der Oberschiene 1 gegenüber den Stirnflächen 19,20 der Mutter 4 zu verhindern, was andernfalls aufgrund des großen Toleranzabstandes D (siehe beispielsweise Figur 7) leicht möglich ist.

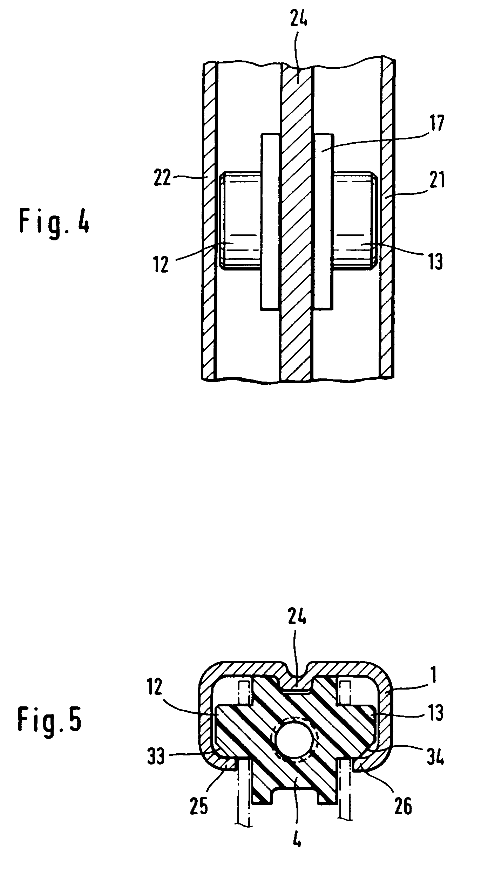

Figur 5 stimmt mit der Ausgestaltung nach Figur 7 weitgehend überein, nur daß der Vorsprung 24 nicht wie in Figur 7 an die Oberschiene durch ein Strangpreß- oder Gießverfahren angeformt (wie es bei Aluminium möglich ist), sondern auf einer vorzugsweise aus Stahl bestehenden Oberschiene 1 nachträglich durch einen Ziehvorgang herausgeformt ist.

Für die Weiterbildung der Erfindung wichtig sind weiterhin noch Ansätze 25,26, die sich beispielsweise in Figur 4 in waagerechter Richtung von den Seitenwänden 21,22 zur Mittelebene der Oberschiene 1 hin erstrecken und vorzugsweise über die gesamte Länge der Oberschiene 1 laufen. Diese Ansätze 25,26 hintergreifen, wie aus den Figuren 1 und 5 bis 7 ersichtlich, die Mantelflächen der Zapfen 12,13 und verhindern so, daß die Oberschiene auch bei starken Vertikalkräften (Unfall) nach oben (z.B. Figur 5) abgehoben werden kann, da die Zapfen eine derartige Bewegung verhindern.

Insbesondere, wenn die Mutter 4, wie weiter oben beschrieben, drehbar in dem Käfig 5 gelagert ist, empfiehlt es sich die Anlageflächen der Vorsprünge 25,26 an den Zapfen 12,13 zu vergrößern. Das geschieht z.B. dadurch, daß, wie insbesondere aus den Figuren 1 bis 3 ersichtlich, die Zapfen eine rechteckförmige Ausnehmung 27,28 besitzen, die breite Auflageflächen 30,31 schaffen, an denen sich die Anlageflächen der Ansätze 25,26 abstützen können. In Figur 1 ist, ebenso wie in Figur 2 und 3, die verbreiterte Anlagefläche 31 angedeutet, wobei die gestrichelte Darstellung in Figur 1 andeuten soll, daß diese Fläche nicht sichtbar hinter der Seitenwand 21 der Oberschiene 1 liegt.

Zur Erzeugung einer größeren Elastizität der Zapfen sind diese mit in die Zapfenlängsachse weisenden, kreissektorförmigen Vertiefungen 32 versehen, wobei diese, wie im Zusammenhang mit Figur 1 erläutert, hinter der Seitenwand (21) liegen und damit bei aufgesetzter Oberschiene nicht sichtbar sind.

Da die durch Tiefziehen entstandene Schiene 1 in Figur 5 nicht zuläßt, daß die Ansätze 25,26 rechtwinklig an die Seitenwände 21,22 angesetzt werden, wurde hierfür an den Zapfen 12,13 der Mutter 4 immer ein Abschnitt 33,34 über die Länge der Mutter abgeschnitten.

In Figur 7 dienen vertikal nach oben ragende Absätze 35,36 der verbesserten Befestigung des Kraftfahrzeugsitzes.

Figur 4 zeigt einen Schnitt in Höhe der Linie G - E in Figur 7, wobei in geschnittener Form die Führungsleiste 24 und die Seitenwände 21,22 zu erkennen sind.

Die Ausgestaltung der seitlichen Führung durch die Leiste 24 bzw. die Ausnehmung kann im Rahmen der Erfindung durch eine geänderte Formgebung auch abgewandelt werden, z.B. durch Verwendung mehrerer Leisten und Nuten oder deren geänderte Profile.

Auch können die Funktion von Antriebsmutter und Spindel prinzipiell vertauscht werden, indem die Spindel und Schiene gegenüber dem Fahrzeugboden fest montiert sind und die Mutter sich mit dem Sitz bewegt.

## Patentansprüche

1. Spindelantrieb für eine Verstelleinrichtung eines Fahrzeugsitzes, bei dem eine Spindel (2) an einer mit einem Sitzkissen verbundenen Oberschiene (1) gelagert ist, welche an einer gegenüber dem Fahrzeugboden gelagerten Antriebsmutter (4) angreift, wobei eine durch einen Antrieb (7) bedingte Spindeldrehung die Oberschiene (1) und damit den Fahrzeugsitz in Spindellängsrichtung fördert, wobei die Oberschiene (1) auf der Auflagefläche (17) der Antriebsmutter (4) axial gleitend geführt ist und wobei die Oberschiene (1) in gegenüber dem Fahrzeugboden im wesentlichen senkrechter Richtung auf der Auflagefläche (17) der Mutter (4) abgestützt ist, dadurch **gekennzeichnet,** daß die Auflagefläche (17) der Antriebsmutter (4) sowie die auf dieser aufsetzende Innenfläche der Oberschiene (1) einander entsprechende Ausnehmungen (23) bzw. Vorsprünge (24) aufweisen, die sich in Spindellängsrichtung erstrecken und eine Führung der Oberschiene (1) in Längsrichtung der Spindel (2) bilden.

2. Spindelantrieb nach Anspruch 1, dadurch **gekennzeichnet**, daß die Oberschiene (1) eine sich über deren Längen erstreckende, in deren Längsrichtung verlaufende Führungsleiste (24) aufweist, die in eine entsprechende Längsnut (23) in der Antriebsmutter (4) eintaucht und für eine seitliche Abstützung der Oberschiene (1) in der Antriebsmutter (4) sorgt.

3. Spindelführung nach Anspruch 2, dadurch **gekennzeichnet**, daß die Leiste (24) mit der Oberschiene (1) einstückig verbunden ist.

4. Spindelantrieb nach Anspruch 3, dadurch **gekennzeichnet**, daß die Führungsleiste (24) durch ein Tiefzieh-, Gieß- oder Strangpreßverfahren oder eine Kombination derartiger Verfahren aus der Oberschiene (1) herausgebildet ist.

5. Spindelantrieb nach einem der Ansprüche 2 bis 4, dadurch **gekennzeichnet**, daß die Führungsleiste (24) aus einem gesondert ausgebildeten, aus gleitfähigem Material bestehenden Stück gebildet ist, welches in eine entsprechende Ausnehmung (23,37) in der Antriebsmutter bzw. der Oberschiene (1) ragt.

6. Spindelantrieb nach einem der Ansprüche 3 bis 6, dadurch **gekennzeichnet**, daß die Führungsleiste (24) über die Führungslänge der Oberschiene (1) läuft und mit dieser verbunden ist und sich gleitend durch eine entsprechende Nut (23) in der Antriebsmutter (4) bewegt.

7. Spindelantrieb nach Anspruch 6, dadurch **gekennzeichnet,** daß die Führungsleiste (24) sich im wesentlichen über die Länge der Antriebsmutter (4) erstreckt und mit dieser fest verbunden ist und die Oberschiene mit einer entsprechenden Längsnut über die Leiste (24) läuft.

8. Spindelantrieb nach einem der vorangegangenen Ansprüche, dadurch **gekennzeichnet,** daß die Antriebsmutter (4) aus Kunststoff geformt ist.

9. Spindelantrieb nach einem der vorangegangenen Ansprüche, dadurch **gekennzeichnet,** daß die Oberschiene (1) aus Aluminium geformt ist.

10. Spindelantrieb nach einem der vorangegangenen Ansprüche, dadurch **gekennzeichnet**, daß die Mutter gegenüber dem Fahrzeugboden in horizontal und quer zur Spindellängsachse liegender Richtung drehbar gelagert ist.

11. Spindelantrieb nach einem der vorangegangenen Ansprüche, dadurch **gekennzeichnet,** daß die Antriebsmutter in horizontal und quer zur Spindelachse weisender Richtung sich erstreckende Zapfen (12,13) besitzt, mittels derer die Antriebsmutter (4) in einem an dem Fahrzeugboden befestigten Käfig (5) horizontal und quer zur Spindellängsachse drehbar gelagert ist.

12. Spindelantrieb nach Anspruch 11, dadurch **gekennzeichnet,** daß die Stirnflächen (19,20) der Zapfen (12,13) sich an Seitenwänden (21,22) der Oberschiene (1) horizontal und quer zur Spindellängsachse abstützen.

13. Spindelantrieb nach Anspruch 12, dadurch **gekennzeichnet,** daß die offenen Enden der Seitenwände (21,22) mit in Spindelrichtung durchgehenden, sich im wesentlichen in Richtung der Mittelebene der Schiene weisenden Ansätze (25,26) versehen sind, die die Mantelflächen der Zapfen (12,13) hintergreifen, um ein Entfernen der Oberschiene (1) in einer von dem Fahrzeugboden weg weisenden Richtung zu verhindern.

14. Spindelantrieb nach Anspruch 13, dadurch **gekennzeichnet,** daß die drehbar in dem Käfig (5) gelagerten, aus dem Käfig ragenden Zapfenenden sich parallel zur Zapfenlängsachse erstreckende Ausnehmungen (27,28) aufweisen, wobei die Ansätze (25,26) der Seitenwände (21,22) mindestens einen Zapfen hintergreifen.

15. Spindelantrieb nach einem der Ansprüche 11 bis 14, dadurch **gekennzeichnet**, daß an die Seitenflächen (8,9) des Käfigs (5) sich im wesentlichen in der gleichen Richtung wie die Zapfen (12,13) erstreckende Laschen ausgeformt sind, die von den Ansätzen (25,26) hintergriffen werden.

16. Spindelantrieb nach einem der vorangegangenen Ansprüche, dadurch **gekennzeichnet,** daß der Käfig (5) aus mindestens zwei Käfigteilen (14,15) gebildet ist, von denen mindestens ein Käfigteil (14 bzw. 15) an den Fahrzeugboden befestigt ist.

17. Spindelantrieb nach einem der Ansprüche 11 bis 16, dadurch **gekennzeichnet,** daß eine Seitenfläche des Käfigs aus einer Unterschiene herausgeformt ist und die zweite Seitenfläche (9) nach dem Einfügen der Antriebsmutter (4) in den Käfig (5) an der Unterschiene mit dieser vorzugsweise unlösbar verbunden ist.

18. Spindelantrieb nach einem der vorangegangenen Ansprüche, dadurch **gekennzeichnet,** daß die Unterschiene nicht länger als die dreifache Länge der Antriebsmutter (4) ist.

## Claims

1. A spindle drive for an adjusting mechanism of a vehicle seat where a spindle (2) is supported on an upper rail (1), connected with a seat cushion, which engages a drive nut (4) supported in respect of the vehicle bottom, with a spindle rotation caused by a drive (7) moving the upper rail (1) and, thus, the vehicle seat in the longitudinal direction of the spindle, the upper rail (1) being guided in an axially sliding manner on the abutment surface (17) of the drive nut (4), and the upper rail (1) being supported on the abutment surface (17) of the nut (4) in essentially the vertical direction with respect to the vehicle bottom,
**characterized** in that the abutment surface (17) of the drive nut (4) and the inside surface of the upper rail (1) which seats itself on the abutment surface have mating recesses (23) and projections (24), -respectively, which extend in the longitudinal direction of the spindle and which form a guideway for the upper rail (1) in the longitudinal direction of the spindle (2).

2. A spindle drive as claimed in claim 1,
**characterized** in that the upper rail (1) has a guide rail (24) which extends over the length and runs in the longitudinal direction of the upper rail (1), which plunges into a corresponding longitudinal groove (23) in the drive nut (4) and which ensures a lateral support of the upper rail (1) in the drive nut (4).

3. A spindle drive as claimed in claim 2,
**characterized** in that the guide rail (24) is connected with the upper rail (1) in one piece.

4. A spindle drive as claimed in claim 3,
**characterized** in that the guide rail (24) is formed out of the upper rail (1) by a deepdrawing process, by casting or extrusion, or by way of a combination of such processes.

5. A spindle drive as claimed in any one of claims 2 to 4,
**characterized** in that the guide rail (24) is formed out of a separately shaped piece of slidable material which projects into a corresponding recess (23, 37) in the drive nut or upper rail (1), respectively.

6. A spindle drive as claimed in any one of claims 3 to 6,
**characterized** in that the guide rail (24) runs over the guide length of the upper rail (1) and is connected with it and moves slidingly through a corresponding groove (23) in the drive nut (4).

7. A spindle drive as claimed in claim 6,
**characterized** in that the guide rail (24) essentially extends over the length of the drive nut (4) and is firmly connected with it, and in that the upper rail runs with a corresponding longitudinal groove over the guide rail (24).

8. A spindle drive as claimed in any one of the preceding claims,
**characterized** in that the drive nut (4) is shaped out of plastic.

9. A spindle drive as claimed in any one of the preceding claims,
**characterized** in that the upper rail (1) is shaped out of aluminium.

10. A spindle drive as claimed in any one of the preceding claims,
**characterized** in that, in the horizontal direction and in the direction transverse to the longitudinal axis of the spindle, the nut is supported rotatably with respect to the vehicle bottom.

11. A spindle drive as claimed in any one of the preceding claims,
**characterized** in that the drive nut has pivots (12, 13) extending in the horizontal direction and in the direction transverse to the longitudinal axis of the spindle, by means of which pivots (12, 13) the drive nut (4) is supported rotatably in the horizontal direction and in the direction transverse to the longitudinal axis of the spindle in a cage (5) fastened to the vehicle bottom.

12. A spindle drive as claimed in claim 11,
**characterized** in that the front faces (19, 20) of the pivots (12, 13) support themselves horizontally and transversely to the longitudinal axis of the spindle on side walls (21, 22) of the upper rail (1).

13. A spindle drive as claimed in claim 12,
**characterized** in that the open ends of the side walls (21, 22) are provided with through projections (25, 26) in the direction of the spindle, the through projections (25, 26) essentially pointing in the direction of the central plane of the rail and reaching behind the peripheries of the pivots (12, 13) to prevent the upper rail (1) from moving away in a direction pointing away from the vehicle bottom.

14. A spindle drive as claimed in claim 13,
**characterized** in that the pivot ends rotatably supported in the cage (5) and projecting out of the cage have recesses (27, 28) extending parallel to the longitudinal axes of the pivots, with the projections (25, 26) of the side walls (21, 22) reaching behind at least one pivot.

15. A spindle drive as claimed in any one of claims 11 through 14,
**characterized** in that lugs are formed to the side walls (8, 9) of the cage (5) and essentially extend in the same direction as the pivots (12, 13) and are engaged from behind by the projections (25, 26).

16. A spindle drive as claimed in any one of the preceding claims,
**characterized** in that the cage (5) is composed of at least two cage parts (14, 15), of which at least one cage part (respectively 14 or 15) is fastened to the vehicle bottom.

17. A spindle drive as claimed in any one of claims 11 through 16,
**characterized** in that one side surface of the cage is shaped out of a lower rail and in that the second side surface (9) is connected preferably undetachably with the lower rail after the drive nut (4) has been inserted into the cage (5).

18. A spindle drive as claimed in any one of the preceding claims,
**characterized** in that the lower rail is not longer than the triple length of the drive nut (4).

## Revendications

1. Dispositif de commande à vis sans fin, pour dispositif de réglage de position d'un siège de véhicule. dans lequel une vis sans fin (2) est montée sur un rail supérieur (1) qui est solidaire d'une assise et qui est en prise sur un écrou d'entraînement (4) monté sur le plancher du véhicule, une rotation de la vis sans fin créée par des moyens d'entraînement (7) provoquant un déplacement du rail supérieur (1) et donc du siège de véhicule suivant la direction longitudinale de la vis sans fin, tandis que le rail supérieur (1) est guidé axialement d'une manière coulissante sur la surface d'appui (17) de l'écrou d'entraînement (4) et que ce rail supérieur (1) prend appui sur la surface d'appui (17) de l'écrou (4) suivant une direction pratiquement perpendiculaire au plancher de véhicule, caractérisé en ce que la surface d'appui (17) de l'écrou d'entraînement (4) et la surface intérieure du rail supérieur (1) qui repose sur cette surface d'appui comportent respectivement des parties en retrait (23) et des parties en saillie (24) qui se correspondent et sont orientées suivant la direction longitudinale de la vis sans fin et qui forment des moyens de guidage du rail supérieur (1) suivant la direction longitudinale de la vis sans fin (2).

2. Dispositif de commande à vis sans fin suivant la revendication 1, caractérisé en ce que le rail supérieur (1) comporte une nervure de guidage (24) qui s'étend sur sa longueur et est orientée suivant sa direction longitudinale et qui s'engage dans une rainure longitudinale (23) correspondante pratiquée dans l'écrou d'entraînement (4) et permet un appui transversal du rail supérieur (1) dans l'écrou d'entraînement (4).

3. Dispositif de commande à vis sans fin suivant la revendication 2, caractérisé en ce que la nervure (34) est venue d'une pièce avec le rail supérieur (1).

4. Dispositif de commande à vis sans fin suivant la revendication 3, caractérisé en ce que la nervure de guidage (24) est réalisée dans la matière du rail supérieur (1) par un procédé d'emboutissage, de moulage par coulée ou d'extrusion ou par une combinaison de tels procédés.

5. Dispositif de commande à vis sans fin suivant l'une des revendications 2 à 4, caractérisé en ce que la nervure de guidage (24) est constituée d'une pièce distincte qui est en une matière favorisant le glissement et qui s'engage dans des parties en retrait (23, 37) correspondantes pratiquées respectivement dans l'écrou d'entraînement et dans le rail supérieur (1).

6. Dispositif de commande à vis sans fin suivant l'une des revendications 3 à 5. caractérisé en ce que la nervure de guidage (24) s'étend sur la longueur de guidage du rail supérieur (1) et est solidaire de ce dernier et en ce qu'elle se déplace d'une manière coulissante le long d'une rainure (23) correspondante pratiquée dans l'écrou d'entraînement (4).

7. Dispositif de commande à vis sans fin suivant la revendication 6. caractérisé en ce que la nervure de guidage (24) s'étend pratiquement sur la longueur de l'écrou d'entraînement (4) et est solidaire à demeure de ce dernier et en ce que le rail supérieur se déplace, par une rainure longitudinale correspondante, sur la nervure (24).

8. Dispositif de commande à vis sans fin suivant l'une des revendications précédentes, caractérisé en ce que l'écrou d'entraînement (4) est formé d'une matière plastique.

9. Dispositif de commande suivant l'une des revendications précédentes, caractérisé en ce que le rail supérieur (1) est formé en aluminium.

10. Dispositif de commande à vis sans fin suivant l'une des revendications précédentes, caractérisé en ce que l'écrou est monté rotatif vis-à-vis du plancher du véhicule et suivant une direction horizontale orientée transversalement à l'axe longitudinal de la vis sans fin.

11. Dispositif de commande à vis sans fin suivant l'une des revendications précédentes, caractérisé en ce que l'écrou d'entraînement comporte des tourillons (12. 13) qui sont orientés horizontalement et transversalement à la direction correspondant à l'axe de la vis sans fin et au moyen desquels l'écrou d'entraînement (4) est monté rotatif, horizontalement et transversalement à l'axe longitudinal de la vis sans fin. dans une cage (5) fixée au plancher du véhicule.

12. Dispositif de commande à vis sans fin suivant la revendication 11, caractérisé en ce que les surfaces frontales (19, 20) des tourillons (12, 13) prennent appui. horizontalement et transversalement à l'axe longitudinal de la vis sans fin, sur des parois latérales (21. 22) du rail supérieur (1).

13. Dispositif de commande à vis sans fin suivant la revendication 12, caractérisé en ce que les extrémités libres des parois latérales (21. 22) comportent des rebords (25. 26) qui sont continus suivant la direction de la vis sans fin et sont orientés pratiquement en direction du plan de symétrie du rail et qui s'accrochent derrière les surfaces périphériques des tourillons (12, 13) de façon à empêcher le rail supérieur (1) de s'écarter dans un sens s'éloignant du plancher du véhicule.

14. Dispositif de commande à vis sans fin suivant la revendication 13, caractérisé en ce que les extrémités des tourillons, qui sont montées rotatives dans la cage (5) et sortent de cette cage, comportent des parties creuse (27, 28) orientées parallèlement à l'axe longitudinal des tourillons, les rebords (25, 26) des parois latérales (21, 22) s'accrochant au moins derrière un tourillon.

15. Dispositif de commande à vis sans fin suivant l'une des revendications 11 à 14, caractérisé en ce que, sur les surfaces latérales (8, 9) de la cage (5), il est prévu, formées dans la matière, des pattes qui sont orientées pratiquement suivant la même direction que les tourillons (12, 13) et derrière lesquelles les rebords (25. 26) s'accrochent.

16. Dispositif de commande à vis sans fin suivant l'une des revendications précédentes, caractérisé en ce que la cage (5) est formée d'au moins deux parties de cage (14, 15) dont au moins une partie de cage (14 ou 15) est fixée au plancher du véhicule.

17. Dispositif de commande à vis sans fin suivant l'une des revendications 11 à 16, caractérisé en ce qu'une surface latérale de la cage est formée dans la matière d'un rail inférieur et en ce qu'après que l'écrou d'entraînement (4) a été introduit dans la cage (5) sur le rail inférieur, la seconde surface latérale (9) est assemblée à ce dernier, de préférence d'une manière inséparable.

18. Dispositif de commande à vis sans fin suivant l'une des revendications précédentes, caractérisé en ce que le rail inférieur n'est pas plus long que le triple de la longueur de l'écrou d'entraînement (4).
